# EUROPEAN PATENT APPLICATION

(11) **EP 2 317 366 A2**
(43) Date of publication of application: **04.05.2011**
(21) Application number: 10180397.1
(22) Date of filing: 27.09.2010
(51) Int. Cl.: G02B 27/01, G01S 13/94

(54) **System for providing a pilot of an aircraft with a visual depiction of a terrain**

(30) Priority: 03.11.2009 US 611713
(71) Applicant: Honeywell International Inc., Morristown, NJ 07962 (US)
(72) Inventor: Wise, John Anthony, Morristown, NJ 07962-2245 (US); Burgin, Roger W., Morristown, NJ 07962-2245 (US); Pepitone, Dave, Morristown, NJ 07962-2245 (US); Valimont, R. Brian, Morristown, NJ 07962-2245 (US)
(74) Representative: Buckley, Guy Julian

(57) **Abstract**

A system for providing a pilot with a visual depiction of a terrain includes, but is not limited to, a data storage unit for storing terrain data, a position determination unit for determining a position of an aircraft, a near to eye display unit worn by the pilot for displaying visual images and for determining a view direction of the pilot. A processing unit is communicatively connected to the data storage unit, to the position determination unit and to the near to eye display unit. The processing unit controls the near to eye display unit to display a three dimensional representation of a viewed terrain region that includes a depiction of the terrain overlaying the terrain within the viewed terrain region and is graphically differentiated to correspond with an altitude of the terrain within the viewed terrain region. The depiction of the terrain is at least partially transparent.

## Description

### TECHNICAL FIELD

The present invention generally relates to a system for enhancing a pilot's situational awareness of terrain around an aircraft, and more particularly relates to a system for depicting terrain.

### BACKGROUND

In order to prevent the occurrence of postulated controlled flight into terrain ("CFIT") events, Terrain Awareness and Warning Systems (hereinafter "TAWS") have been developed to provide pilots with an electronic means to detect terrain as well and to provide warnings when an aircraft's flight path, if unaltered, will lead to a collision with terrain. One such example of a TAWS is a Ground Proximity Warning System (hereinafter "GPWS") which uses a radar altimeter to assist in calculating terrain closure rates.

An improvement to GPWS is an Enhanced Ground Proximity Warning System (hereinafter "EGPWS") which incorporates the use of Global Positioning Satellites (hereinafter "GPS") and a terrain database storing data relating to the altitudes and/or elevations of terrain world wide. EGPWS determines the position of an aircraft and then provides a two dimensional image of the terrain around the aircraft on a display screen in the cockpit of the aircraft. The terrain around the aircraft is depicted with a color code that correlates to the altitude and/or elevation of the terrain. For instance, if the terrain reaches to elevations well above the altitude of the aircraft, it is shown in red. Terrain that lies well below the aircraft is shown in green. Terrain that lies at approximately the same altitude as the aircraft is shown in yellow.

Another system that electronically provides pilots with an enhanced awareness of the terrain near the aircraft is an integrated Primary Flight Display (hereinafter "IPFD"). An IPFD provides a pilot with a three dimensional image of the terrain located in front of the pilot's aircraft. The image is constantly updated and resembles a video while the aircraft is in flight.

While EGPWS and IPFD have greatly reduced the likelihood of CFIT events, these systems have their limitations. For instance, the image provided by EGPWS provides a pilot with a two-dimensional view from an above-the-aircraft perspective. The pilot must mentally manipulate and interpret the image to gain a situational awareness of where the illustrated terrain is with respect to the aircraft. In certain circumstances, the pilot may not be able to absorb the information provided by EGPWS. With respect to IPFD, this system only provides a view of the terrain lying ahead of the aircraft, not beneath it, behind it, or on either side of it.

Accordingly, it is desirable to provide a system that enhances a pilot's ability to gain a situational awareness of the terrain located around the pilot's aircraft which, in turn, will reduce the occurrence of CFIT. Furthermore, other desirable features and characteristics of the present invention will become apparent from the subsequent detailed description of the invention and the appended claims, taken in conjunction with the accompanying drawings and this background of the invention.

### BRIEF SUMMARY

A system for providing a pilot of an aircraft with a visual depiction of a terrain is disclosed herein. In a first non-limiting embodiment, the system includes, but is not limited to, a data storage unit that is configured to store terrain data. The system also includes a position determination unit that is configured to determine a position of the aircraft. The system further includes a near to eye display unit that is adapted to be worn by the pilot and that is configured to display visual images and to determine a view direction of the pilot. The system also includes a processing unit, that is communicatively connected to the data storage unit, to the position determination unit and to the near to eye display unit. The processing unit is configured to control the near to eye display unit to display a three dimensional representation of a viewed terrain region, the three dimensional representation including a depiction of the terrain within the viewed terrain region, the depiction of the terrain being graphically differentiated in a manner that corresponds with an altitude of the terrain within the viewed terrain region. The depiction of the terrain is at least partially transparent.

In a second non-limiting embodiment, the system includes a data storage unit that is configured to store terrain data and structure data. The system also includes a position determination unit that is configured to determine a position of the aircraft. The system also includes a near to eye display unit that is adapted to be worn by the pilot and that is configured to display visual images and to determine a view direction of the pilot. The system also includes a processing unit that is communicatively connected to the data storage unit, to the position determination unit and to the near to eye display unit. The processing unit is configured to control the near to eye display unit to display a three dimensional representation of a viewed terrain region. The three dimensional representation includes a depiction of the terrain and a depiction of a structure within the viewed terrain region. The depiction of the terrain and the depiction of the structure are color coded in a manner that corresponds with an altitude of the terrain and an altitude of the structure within the viewed terrain region. The depiction of the terrain and the depiction of the structure are at least partially transparent.

In a third non-limiting embodiment, the system includes a data storage unit that is configured to store terrain data. They system also includes a position determination unit that is configured to determine a position of the aircraft. The system further includes a near to eye display unit that is adapted to be worn by the pilot and that is configured to display visual images and to determine a view direction of the pilot. The system also includes a processing unit that is communicatively connected to the data storage unit, to the position determination unit and to the near to eye display unit. The processing unit is configured to obtain the position of the aircraft from the position determination unit, to obtain the view direction from the near to eye display, to determine a viewed terrain region utilizing the position of the aircraft and the view direction, to obtain a sub-set of the terrain data relating to the viewed terrain region from the data storage unit, and to control the near to eye display unit to display a three dimensional representation of the viewed terrain region. The three dimensional representation includes a depiction of the terrain overlaying the terrain within the viewed terrain region. The depiction of the terrain is color coded in a manner that corresponds with an altitude of the terrain within the viewed terrain region. The depiction of the terrain comprises a hollow wire frame.

### BRIEF DESCRIPTION OF THE DRAWINGS

The present invention will hereinafter be described in conjunction with the following drawing figures, wherein like numerals denote like elements, and

FIG. 1 is a schematic view of a non-limiting embodiment of a system for providing a pilot of an aircraft with a visual depiction of a terrain;

FIG. 2 is an overhead schematic view of an aircraft flying near a mountainous region;

FIG. 3 is a perspective view of a pilot in a cockpit of the aircraft of FIG. 2 and of the mountainous region of FIG. 2;

FIG. 4 is a perspective view similar to FIG. 3 including a three dimensional representation of a terrain displayed to the pilot of FIG. 3 through a near to eye display unit;

FIG. 5 is an enlarged perspective view of the three dimensional representation of FIG. 4;

FIG. 6 is a perspective view similar to FIG. 3 wherein the pilot is viewing a different portion of the mountainous region of FIG. 2;

FIG. 7 is an enlarged perspective view showing a three dimensional representation of the different portion of the mountainous region of FIG. 6; and

FIG. 8 is fragmentary, front view of a pilot wearing an alternate embodiment of the near to eye display unit of FIG. 4.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

One solution to the problem described above is to provide the pilot of an aircraft with an on-board system that displays a three dimensional depiction of the terrain located in generally all directions around the aircraft as the aircraft is in flight. The three dimensional display is provided to the pilot through a near to eye display unit that displays the three dimensional depiction of the terrain over the actual terrain that would be visible to the pilot if visual conditions permitted the pilot to see the terrain. The three dimensional display is transparent (e.g., a hollow wire frame image) to prevent obstruction of the pilot's vision and to allow the pilot to see air traffic, the interior of the cockpit, and the view through the windshield.

Use of a near to eye display unit permits the pilot to turn and/or tilt his or her head to see a three dimensional depiction of the terrain all around the aircraft. In this manner, the pilot can gain an understanding of the terrain located around the aircraft in the darkness of night or in other environments that present diminished or limited visibility. By providing the display in three dimensions, the pilot can inherently understand the information presented without having to engage in any substantial mental manipulation of the information presented.

The three dimensional depiction of the terrain is graphically differentiated to provide the pilot with information about the altitude of the depicted terrain. Any method of graphic differentiation may be implemented. For example, lines of differing thickness or brightness may be used to communicate differing elevations of terrain. The use of solid and broken lines may also be implemented. In other embodiments, portions of the terrain may be flashed or strobed to communicate information about terrain elevation to the pilot.

In another example, the graphic differentiation may be achieved by color coding the three dimensional depiction such that terrain located generally above the aircraft would be displayed in a first color (e.g., red), terrain located at generally the same altitude as the aircraft would be displayed in a second color (e.g., yellow) and terrain located generally below the aircraft would be displayed in a third color (e.g., green). By color coding the three dimensional depiction, the pilot can easily assess whether the depicted terrain poses a danger to the aircraft. Color coding the three dimensional depiction in this manner provides the pilot with assistance even when visibility through the windshield is unobstructed. For example, while flying through mountainous terrain on a clear day, a pilot may become confused as his or her eyes attempt to adjust to the various terrain features that are constantly changing in depth and distance. The color coding allows the pilot to instantly ascertain whether a visible terrain feature is a danger to the aircraft even when the pilot's eyes can't adjust quickly enough to provide this assessment. The use of other types of graphic differentiation can similarly assist the pilot in this manner.

The system disclosed herein includes a processing unit that is communicatively connected to the near to eye display unit. The near to eye display unit is configured to determine a view direction of the pilot and to communicate the view direction to the processing unit. As used herein, the term "view direction" refers to the direction that the pilot is looking in from the cockpit of the aircraft. The system also includes a position determination unit and a data storage unit, both of which are communicatively connected to the processing unit.

The position determination unit is configured to detect the position of the aircraft with respect to the earth and to communicate the position to the processing unit. The processing unit is configured to determine a viewed terrain region using the position of the aircraft and the view direction of the pilot. As used herein, the term "viewed terrain region" refers to a portion of terrain that the pilot is presently looking at. Depending on the angle of the pilot's head and the elevation of the aircraft, the viewed terrain region may include items other than terrain. For example, if a pilot is looking toward the horizon, then a portion of the viewed terrain region will include sky.

The data storage unit stores data including information about the terrain on the surface of the earth. The processing unit controls the data storage unit to provide a subset of the terrain data from the data storage unit that relates to the viewed terrain region. Using the subset of data relating to the viewed terrain region, the processing unit controls the near to eye display unit to present the three dimensional depiction of the terrain that is located within the viewed terrain region.

A greater understanding of the embodiments of the system disclosed herein may be obtained through a review of the illustrations accompanying this application together with a review of the detailed description that follows.

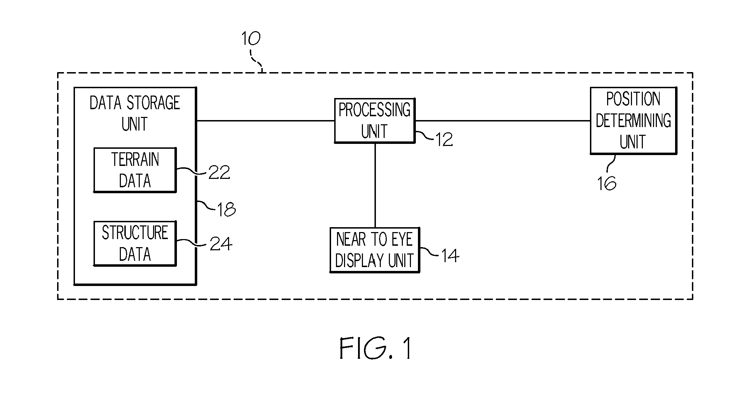

With respect to FIG. 1, an example of a system 10 for providing a pilot of an aircraft with a visual depiction of terrain is illustrated. System 10 includes a processing unit 12, a near to eye display unit 14, a position determination unit 16 and a data storage unit 18. In some embodiments, system 10 may include additional or fewer components. In some embodiments, some or all of the individual components of system 10 may be consolidated into a single, self contained device. For example, near to eye display unit 14 may include a GPS chip set, a microprocessor and a data memory device such as a flash drive. In other examples, the components of system 10 may be housed separately from one another in a cockpit or elsewhere on an aircraft. In still other examples, the components of system 10 may not be dedicated exclusively for use with system 10, but rather may be associated with other on-board systems of the aircraft and may perform duties required by both system 10 and other on-board systems. In still other embodiments, some components of system 10 may not be housed onboard the aircraft, but rather may be housed externally to the aircraft and may be configured to communicate wirelessly with the other components of system 10.

Processing unit 12 may be any suitable computer processor such as, for example, a microprocessor, a digital signal processor, or any other processor capable of at least receiving and/or retrieving data, calculating a result using the data, and controlling a display unit to display the result. Processing unit 12 may comprise multiple computer processors that are communicatively connected to one another over a local area network (LAN) or a wide area network (WAN). In some embodiments, processing unit 12 may be housed onboard an aircraft. In other embodiments, processing unit 12 may configured to wirelessly communicate with the aircraft employing system 10 and housed remotely at an airport, at an air traffic control facility, at a central location, or otherwise housed externally to the aircraft employing system 10.

Near to eye display unit 14 is a system that is configured to be worn by a pilot and that is further configured to present a display screen close to one or both eyes of the pilot. Near to eye display systems are well known in the art and exemplary near to eye systems are disclosed in U.S. patents nos. RE28,847; 5,003,300; 5,539,422; 5,742,263; and 5,673,059. In at least one non-limiting embodiment of system 10, near to eye display unit 14 is configured to display three dimensional images to the pilot. The three dimensional images are transparent and may have the appearance of hollow wire frames. In other embodiments, other types of transparent three dimensional images may be displayed. By providing a transparent image, near to eye display unit 14 permits the pilot to see the three dimensional image without obstructing the pilot's view. In some embodiments, near to eye display unit may also be configured to display images in different colors to permit color coding of the three dimensional images, as discussed below.

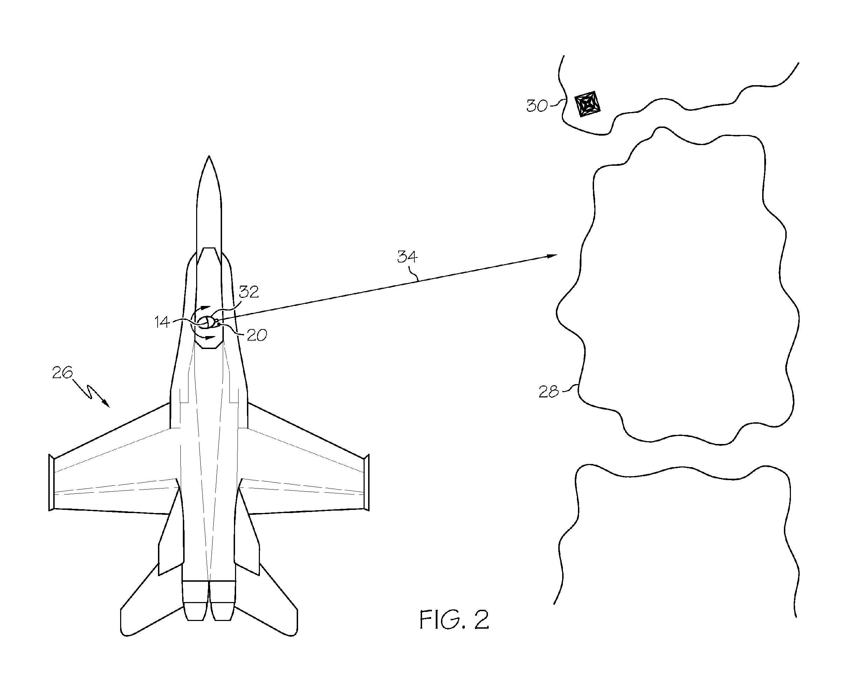

In some embodiments, near to eye display unit 14 includes a display screen 20 (see FIGS. 2-3) that can be moved into and out of a position directly in front of an eye of the pilot. In some embodiments, display screen 20 may be a monocle. The monocle can be part of a helmet or part of a headset worn by the pilot. In other embodiments, display screen 20 can be a visor that is configured to present a stereo image to the pilot. The visor can be part of a helmet and can be moved into and out of a position directly in front of both eyes of the pilot. When a pilot is wearing near to eye display unit 14, as the pilot turns his or her head, display screen 20 turns with the pilot's head. In this manner, the pilot can look around as needed without loosing sight of the display screen. In a manner well known in the near to eye display art, near to eye display unit 14 is further configured to track the movement of the pilot's head as the pilot turns his or her head horizontally and vertically. By tracking this motion, near to eye display unit 14 can determine the view direction of the pilot throughout the flight of the aircraft.

Near to eye display unit 14 is communicatively connected to processing unit 12 and is configured to communicate the view direction to processing unit 12. Processing unit 12 is configured to provide control commands to near to eye display unit 14 to cause near to eye display unit 14 to display three dimensional images. Any type of connection effective to transmit signals between near to eye display unit 14 and processing unit 12 may be employed. For example, and without limitation, coaxial cables, transmission lines, microstrips, an input/output bus connection, and any type of wireless communication system, or any combination of the foregoing, may be employed to communicatively connect near to eye display unit 14 to processing unit 12.

Position determination unit 16 is an aircraft mounted device that is configured to determine the aircraft's current position (e.g., latitude, longitude and altitude) and to provide the aircraft's current position to processing unit 12. Position determination unit 16 may comprise an onboard navigation system that can include, but which is not limited to, an inertial navigation system, a satellite navigation system (e.g., Global Positioning System) receiver, VLF/OMEGA, Loran C, VOR/DME, DME/DME, IRS, a Flight Management System (FMS), and/or an altimeter or any combination of the foregoing. Position determination unit 16 is communicatively connected to processing unit 12. Any type of connection effective to transmit signals between position determination unit 16 and processing unit 12 may be employed. For example, and without limitation, coaxial cables, transmission lines, microstrips, an input/output bus connection, and any type of wireless communication system, or any combination of the foregoing, may be employed to communicatively connect position determination unit 16 to processing unit 12.

Data storage unit 18 is a data storage component that may be housed onboard the aircraft employing system 10. In other embodiments, data storage unit 18 may be configured to wirelessly communicate with the aircraft employing system 10 and may be housed remotely at an airport, at an air traffic control facility, at a central location, or otherwise housed externally to the aircraft employing system 10. Data storage unit 18 is communicatively connected to processing unit 12. Any type of connection effective to transmit signals between processing unit 12 and data storage unit 18 may be employed. For example, and without limitation, coaxial cables, transmission lines, microstrips, an input/output bus connection, and any type of wireless communication system, or any combination of the foregoing, may be employed to communicatively connect data storage unit 18 to processing unit 12.

In at least the embodiment illustrated in FIG. 1, data storage unit 18 is an electronic memory device that is configured to store data. Data storage unit 18 may be any type of data storage component including, without limitation, non-volatile memory, disk drives, tape drives, and mass storage devices and may include any suitable software, algorithms and/or sub-routines that provide the data storage component with the capability to store, organize, and permit the retrieval of data.

In at least one embodiment, data storage unit 18 is configured to store data pertaining to the altitude and/or the elevation of terrain (hereinafter, terrain data 22). In some embodiments, terrain data 22 includes information about terrain located world wide. In other embodiments, terrain data 22 may relate to terrain only in predetermined geographical regions of the world where the aircraft is expected to be employed.

In some embodiments, data storage unit 18 is further configured to store data related to manmade structures such as buildings, towers, navigation beacons, antennas, and other manmade structures whose height may be relevant to a pilot of an aircraft (hereinafter, structure data 24). In still other embodiments, data storage unit 18 may be further configured to store data indicative of the type of terrain present. For example, data storage unit 18 may store data indicating whether terrain is a woods, a mountain, a lake, an ocean, a canyon, a river, a ravine, a flat land, etc....

Processing unit 12 is configured (i.e., processing unit 12 is loaded with, and operates, appropriate software, algorithms and/or sub-routines) to receive the aircraft's position from position determining unit 16 and to receive the view direction from near to eye display unit 14 and to utilize the aircraft's position and the view direction to determine the viewed terrain region. Once processing unit 12 has determined the viewed terrain region, it is configured to obtain a subset of terrain data 22 from data storage unit 18 that contains information about the altitude of the terrain located within the viewed terrain region. Processing unit 12 is further configured to send control commands to near to eye display unit 14 to display a three dimensional depiction of the terrain located within the viewed terrain region.

As the pilot turns his or her head, near to eye display unit 14 determines a new view direction. As the plane continues in flight, the position determining unit 16 determines a new position of the aircraft. Processing unit 12 utilizes the new view direction and the new position of the aircraft to determine a new viewed terrain region. Processing unit 12 uses the new viewed terrain region to obtain a new subset of terrain data 22 which processing unit 12 then uses to control near to eye display unit 14 to display a new three dimensional depiction of the terrain located within the new viewed terrain region. In at least some embodiments, this process repeats itself continuously throughout the flight of the aircraft to provide the pilot with a constantly updated, real-time three dimensional depiction of the terrain located in the viewed terrain region.

In the embodiments illustrated in FIGS. 1-7, processing unit 12 is further configured to control near to eye display unit 14 to provide a color coded depiction of the terrain located within the viewed terrain region. In one non-limiting implementation, terrain features that are positioned more than 250 feet below the aircraft are displayed in green. Different shades and/or intensities of green can be used to further distinguish terrain that is more than 250 feet below the aircraft based on the terrain's altitude (e.g., higher altitude terrain may be depicted in a darker green than lower altitude terrain). Terrain features that are located at approximately the same altitude as the aircraft (e.g. from 250 feet below the aircraft to 500 feet above the aircraft) are displayed in yellow. Different shades and/or intensities of yellow may be used to differentiate terrain that is below the aircraft from terrain that is above the aircraft (e.g. terrain that is within 250 feet below the aircraft may be depicted in a light yellow while terrain that is within 500 feet above the aircraft may be depicted in a dark yellow). Terrain features that have an altitude of more than 500 feet above the aircraft are displayed in red. In other embodiments, any other suitable color coding and/or color shading system may be employed without departing from the teachings of the present disclosure. Similarly, in other embodiments, other elevation separations between the aircraft and the terrain features may be employed without departing from the teachings of the present disclosure. In still other embodiments, other types of graphic differentiation may be employed to communicate information to the pilot regarding the relative altitude of the depicted terrain. In some embodiments, additional colors may be used to enhance the three dimensional effect of the depiction of the terrain that are not related to the aircraft's current altitude (e.g., dark blue may be used to depict bodies of water and light blue may be used to depict portions of the sky).

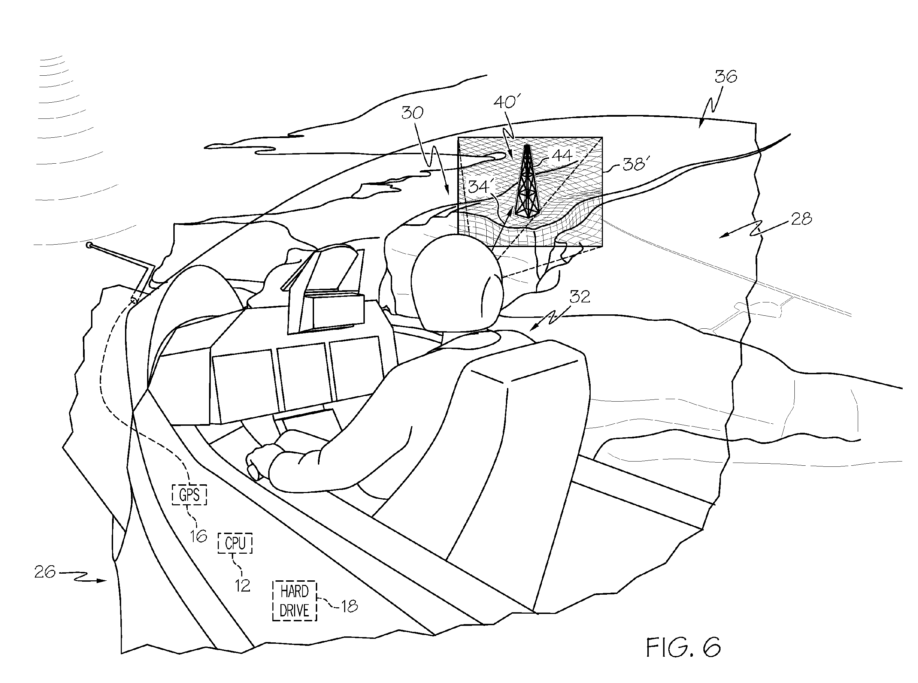

FIGS. 2-5 illustrate a first embodiment of system 10 and FIGS. 6-7 illustrate a second embodiment. With respect to FIG. 2, a schematic view of an aircraft 26 flying through a mountainous region, including a first mountain 28 and a second mountain 30, is illustrated. A pilot 32 wearing near to eye display unit 14 is illustrated sitting in a cockpit of aircraft 26. Pilot 32 is free to rotate his head about his neck to obtain substantially a 360 degree view around the aircraft. The pilot is also free to look up and down. Near to eye display unit 14, which is worn on the head of pilot 32, moves as the pilot's head moves. Near to eye display unit 14 detects this motion and is configured to determine the view direction of the pilot. In FIG. 2, pilot 32 is looking in a view direction 34 that enables pilot 32 to view a portion of first mountain 28.

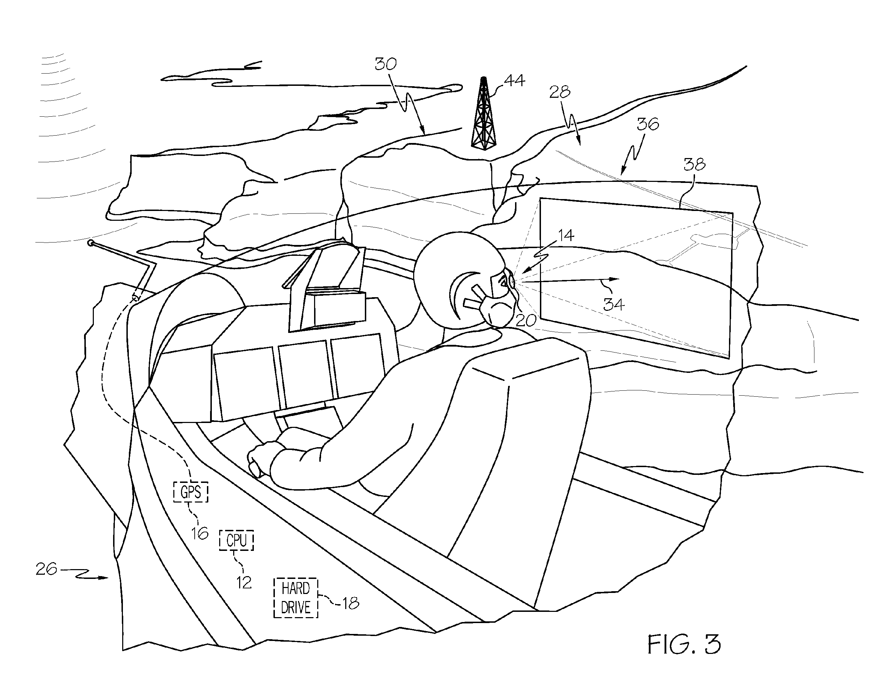

With respect to FIG. 3, a perspective view depicts the cockpit of aircraft 26, pilot 32, and the view through windshield 36 of first mountain 28 and second mountain 30. Pilot 32 is wearing near to eye display unit 14 including display screen 20. Display screen 20 is a transparent monocle positioned in front of the right eye of pilot 32. Near to eye display unit 14 determines view direction 34 and communicates view direction 34 to processing unit 12. At the same time, position determining unit 16 determines the position of aircraft 26 and communicates that position to processing unit 12. Processing unit 12 utilizes view direction 34 and the position of aircraft 26 to determine a viewed terrain region 38. Once viewed terrain region 38 has been determined, processing unit 12 retrieves a subset of terrain data 22 (see FIG. 1) from data storage unit 18. The subset of terrain data 22 contains information about the terrain located within the viewed terrain region. In the illustrated example, the subset of terrain data 22 relates to a portion of first mountain 28.

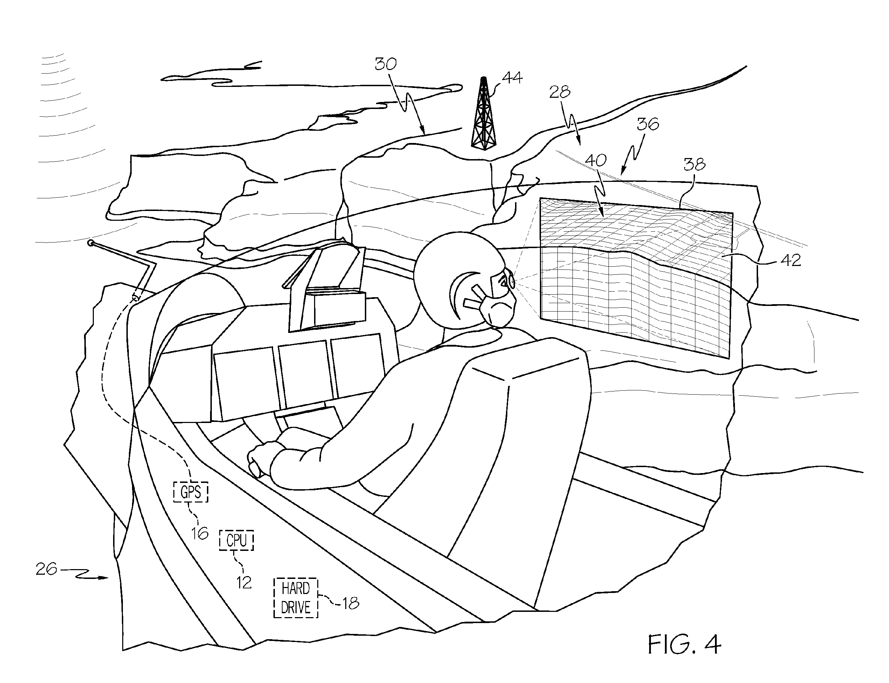

With respect to FIG. 4, a three dimensional representation 40 of the viewed terrain region 38 is illustrated. The three dimensional representation includes a depiction of the terrain (hereinafter "depiction of terrain 42") located within viewed terrain region 38. Depiction of terrain 42 comprises a hollow wire frame representation of the terrain that is located within viewed terrain region 38.

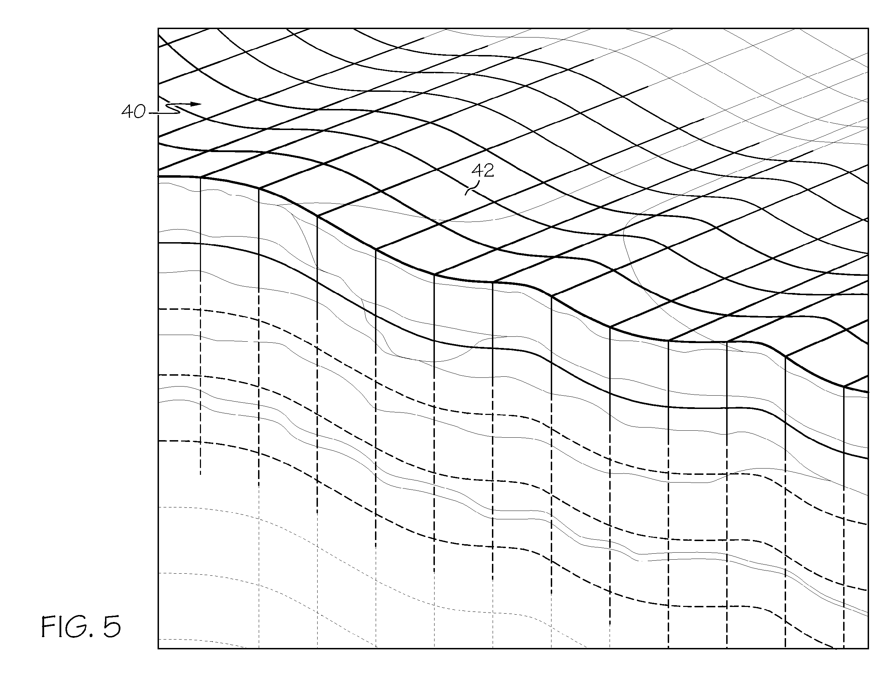

With respect to FIG. 5, an expanded view of three dimensional representation 40 is presented. The depiction of terrain 42 in FIG. 5 is illustrated using different types of lines. An upper portion of the depiction of terrain 42 is illustrated with solid lines. In FIG. 5, the use of solid lines is intended to correspond to a specific color (e.g., red). The solid lines are used to illustrate terrain that is disposed at an altitude above aircraft 26 (not shown in FIG. 5). A central portion of the depiction of terrain 42 is illustrated with dashed lines. In FIG. 5, the use of dashed lines is intended to correspond with a second specific color (e.g., yellow). The dashed lines are used to illustrate terrain that is disposed at an altitude that is generally the same as the altitude of aircraft 26. A lower portion of the depiction of terrain 42 is illustrated with dotted lines. In FIG. 5, the use of dotted lines is intended to correspond with a third specific color (e.g., green). The dotted lines are used to illustrate terrain that is disposed at an altitude below aircraft 26.

In some embodiments, system 10 is configured to display the three dimensional representation 40 of the viewed terrain region utilizing depth cueing. As used herein, the term "depth cueing" refers to a display strategy wherein displayed objects that are distant from the viewer are displayed lightly or faintly as compared with objects that are closer to the viewer. In other embodiments, system 10 is configured to display the three dimensional representation 40 of the viewed terrain region utilizing color cueing. As used herein, the term "color cueing" refers to a display strategy wherein colors that are used to display objects that are disposed at a higher altitude are displayed more brightly than colors used to display objects that are disposed at a lower altitude.

With respect to FIG. 6, a second embodiment of system 10 is illustrated that utilizes structure data 24 in addition to terrain data 22. In FIG. 6, pilot 32 has turned his head to look at second mountain 30. This action caused near to eye display unit 14 to determine a new view direction 34' which results in the determination of a new viewed terrain region 38', in the manner discussed previously. New viewed terrain region 38' contains a manmade structure, a tower 44, positioned on top of second mountain 30.

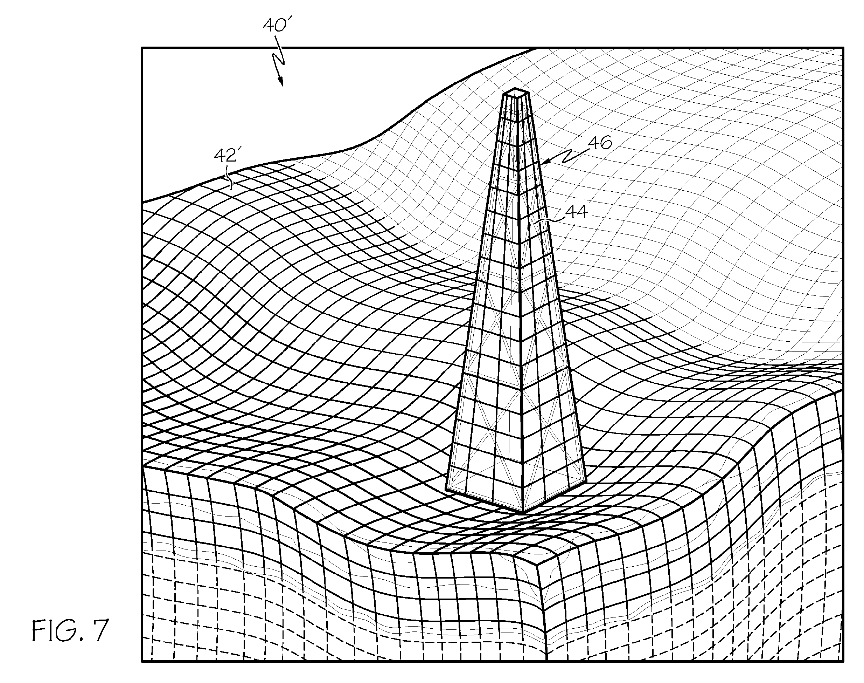

In the embodiment illustrated in FIG. 6, processing unit 12 retrieves a subset of terrain data 22 relating to the terrain located within the viewed terrain region. In addition, processing unit 12 also retrieves a subset of structure data 24 relating to the structures located within the viewed terrain region. In the example depicted in FIG. 6, the subset of structure data 24 includes information about tower 44. Upon receipt of the subset of terrain data 22 and the subset of structure data 24, processing unit 12 controls near to eye display unit 14 to display a three dimensional representation 40' of the viewed terrain region. As best seen in FIG. 7, three dimensional representation 40' contains both a depiction of terrain 42' representing the terrain located within the viewed terrain region, and also a depiction of structures 46 representing the structures, such as tower 44, that are located within the viewed terrain region.

As with the embodiment illustrated in FIG. 5, different types of lines (solid and dashed) are illustrated in FIG. 7 to represent the use of different colors by near to eye display unit 14 which, in turn, represent terrain and/or structures at different altitudes. Additionally, the embodiment illustrated in FIG. 7 may include depth cueing and/or color cueing.

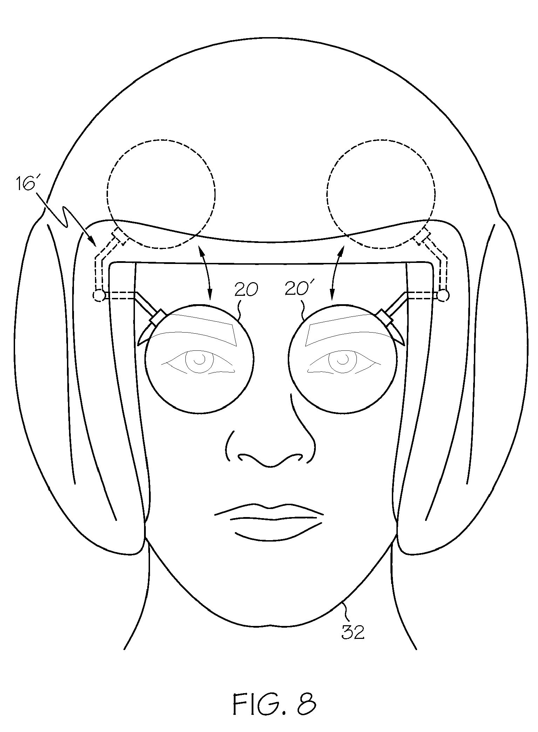

With respect to FIG. 8, an alternate embodiment of near to eye display unit 14' is illustrated. Near to eye display unit 14' includes display screen 20 and a second display screen 20'. By providing a second display screen, near to eye display unit 14' projects a stereo image and thus provides pilot 32 with an enhanced three dimensional representation 40 of the viewed terrain.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system (10) for providing a pilot (32) of an aircraft (26) with a visual depiction of a terrain (42), the system (10) comprising:
a data storage unit (18) configured to store terrain data (22);
a position determination unit (16) configured to determine a position of the aircraft (26);
a near to eye display unit (14) adapted to be worn by the pilot (32) and configured to display visual images and to determine a view direction (34) of the pilot (32); and
a processing unit (12) communicatively connected to the data storage unit (18), to the position determination unit (16) and to the near to eye display unit (14), the processing unit (12) being configured to control the near to eye display (14) unit to display a three dimensional representation (40) of a viewed terrain region (38), the three dimensional representation (40) including a depiction of the terrain (42) within the viewed terrain region (38), the depiction of the terrain (42) being graphically differentiated in a manner that corresponds with an altitude of the terrain within the viewed terrain region (38) and wherein the depiction of the terrain (42) is at least partially transparent.

2. The system (10) of claim 1 wherein the processing unit (12) is further configured to:
obtain the position of the aircraft (26) from the position determination unit (16),
obtain the view direction (34) from the near to eye display (14);
determine the viewed terrain region (38) utilizing the position of the aircraft (26) and the view direction (34),
obtain a sub-set of the terrain data (22) relating to the viewed terrain region (38) from the data storage unit (18), and
control the near to eye display unit (14) to display the three dimensional representation (40) of the viewed terrain region (38) and to color code the depiction of the terrain (42) utilizing the sub-set of the terrain data (22).

3. The system (10) of claim 1 wherein the processing unit (12) is further configured to control the near to eye display unit (14) to display portions of the depiction of the terrain (42) that are generally below the aircraft (26) in a first color, to display portions of the depiction of the terrain (42) that are generally at a same altitude as the aircraft (26) in a second color, and to display portions of the depiction of the terrain (46) that are generally above the aircraft (26) in a third color.

4. The system (10) of claim 3 wherein the first color is green, the second color is yellow and the third color is red.

5. The system (10) of claim 1 wherein the three dimensional representation (40) of the viewed terrain region (38) includes depth cueing.

6. The system (10) of claim 1 wherein the three dimensional representation (40) of the viewed terrain region (38) includes color cueing.

7. The system (10) of claim 6 wherein the three dimensional representation (40)of the viewed terrain region (38) includes depth cueing.

8. The system (10) of claim 1 wherein the near to eye display (14) is configured to display visual images in stereo.

9. The system (10) of claim 1 wherein the viewed terrain region (38) may comprise any geographical region located within generally 360 degrees around the aircraft (26).

10. The system (10) of claim 1 wherein the depiction of the terrain (42) comprises a hollow wire frame.
